# EUROPÄISCHE PATENTANMELDUNG

(11) **EP 1 189 181 A1**
(43) Veröffentlichungstag der Anmeldung: **20.03.2002**
(21) Anmeldenummer: 00121376.8
(22) Anmeldetag: 12.10.2000
(51) Int. Cl.: G07F 17/26, G11B 27/031

(54) **Verfahren zum Versenden von Daten mit einem automatisierten Terminal**

(30) Priorität: 01.09.2000 DE 10043221
(71) Anmelder: picture-clip.de GmbH, Soft- und Hardware für's Internet, 49835 Wietmarschen-Lohe (DE)
(72) Erfinder: Raberg, Jürgen, 49808 Lingen (DE); Raberg, Christian, 49808 Lingen (DE); Hatesaul, Sven, 49808 Lingen (DE)
(74) Vertreter: Lewald, Dietrich, Dipl.-Ing.

(57) **Zusammenfassung**

Verfahren zur Aufnahme, Fernübertragung und Wiedergabe von Daten, wobei zumindest teilweise nichtdigitale Daten aufgenommen und digitalisiert werden und die Daten elektronisch bearbeitet, insbesondere komprimiert und als auf einem Datenverarbeitungsgerät ausführbares Programm über mindestens ein Kommunikationsnetzwerk versendet werden, wobei zur Aufnahme der Daten ein automatisiertes Terminal (1) mit zumindest einer Kamera (3) und zumindest einer Vorrichtung zum Einziehen von Geldbeträgen (2) dient.

## Beschreibung

Die Erfindung betrifft ein Multimediabildterminal zum Aufnehmen und Versenden von bewegten Bildern.

Derartige Systeme sind als Kombinationen aus Computern, Computerperipheriegeräten, wie Digitalkamera, Modem und entsprechender Software bekannt. Sie können mit Hilfe des Internets dazu dienen, Kurzfilme aufzunehmen und über das Internet zu versenden. Das US-Patent 6,014,689 beschreibt eine Software, die Bilddaten bewegter Bilder als mit Hilfe eines Computerbetriebssystems auf einem Computer ausführbare Programme zur Bildwiedergabe versenden kann.

Diese Systeme haben den Nachteil, dass zur Nutzung aufwendige Anschaffungen von Standardbetriebsystemen, Computern und Peripheriegeräten, deren Installation sowie elementare Computerkenntnisse nötig sind. Aufgabe der Erfindung ist es daher, ein Verfahren zur Verfügung zu stellen, dass es erleichtert, bewegte Bilder aufzunehmen und zu versenden.

Diese Aufgabe wird erfindungsgemäß durch ein Verfahren zur Aufnahme, Fernübertragung und Wiedergabe von Daten gelöst, wobei zumindest teilweise nichtdigitale Daten aufgenommen und digitalisiert werden und die Daten elektronisch bearbeitet, insbesondere komprimiert als auf einem Datenverarbeitungsgerät ausführbares Programm über mindestens ein Kommunikationsnetzwerk versendet werden, wobei zur Aufnahme der Daten ein automatisiertes Terminal mit zumindest einer Kamera und zumindest einer Vorrichtung zum Einziehen von Geldbeträgen dient. Diese kann beispielsweise ein Kassierautomat mit Münzeinwurf, Banknoteneinzug, Wechselgeldrückgabe und/oder ein Kredit- und/oder Geldkartenlesegerät sein, wie er beispielsweise für Fahrkartenautomaten verwendet wird. Zur Datenbearbeitung und zum Datenversand als ausführbares Programm kann jede dem Fachmann bekannte Softwareprogrammierung verwendet werden. Es können ansonsten alle geeigneten und dem Fachmann bekannten Kombinationen aus Hard- und Software für diese Erfindung und ihre im folgenden beschriebenen Ausführungsformen eingesetzt werden. Durch das automatisierte Terminal wird es möglich, die Dienstleistung, Filmsequenzen aufzunehmen und schnell zu versenden, öffentlich und jederzeit an solchen Terminals zugänglich zu machen und diese beispielsweise lediglich durch Einwurf einer Münze nutzen zu können.

Vorteilhaft können bei dem erfindungsgemäßen Verfahren die vom Terminal aufgenommenen Daten vor dem Versenden als ausführbares Programm mit weiteren Daten kombiniert werden, die von dem Terminal und/oder extern über mindestens eines der mit dem Terminal verbundenen Kommunikationsnetzwerke wie dem Internet zugeführt werden. So können beispielsweise die vom Terminalnutzer aufgenommenen Bilder mit anderen Bildern vermischt und kombiniert werden. In gleicher Weise können auch Tondaten wie Musiksequenzen, oder Textsequenzen mit den aufgenommenen Daten kombiniert werden. So kann der Terminalnutzer beispielsweise in der Bildnachricht mit Landschaften, Abbildungen berühmter Personen oder Musik ,in Szene gesetzt' werden oder auch Werbung in die versendete Nachricht integriert werden.

Bevorzugt werden die auf dem Datenverarbeitungsgerät wiedergebbaren Daten vor dem Versenden zumindest teilweise von dem Terminal wiedergegeben. Dadurch kann der Terminalnutzer prüfen, welche Bild- Ton- und/oder Textsequenzen zum Versenden aufgenommen und/oder zum Versenden kombiniert wurden.

Von den versendbaren Daten werden vorteilhaft zumindest teilweise nach vom Anwender eingegebenen Angaben ausgewählte Daten versendet und/oder teilweise gelöscht. Hierzu können alle dem Fachmann bekannten Programmierungen zur benutzermenugesteuerten Bild-, Ton- und Textbearbeitung angewandet werden. So kann der Nutzer entscheiden, ob bzw. welche Nachricht oder welche Bild- Ton- und/oder Textsequenzen er versenden will.

In einer bevorzugten Ausführung des Verfahrens der Erfindung werden vom Terminal erfasste Daten, insbesondere Eingaben der Terminalnutzer zumindest teilweise über zumindest eines der Kommunikationsnetzwerke zu zumindest einem externen Datenverarbeitungsgerät übertragen. Dadurch lassen sich mit diesem Datenverarbeitungsgerät beispielsweise Buchungsvorgänge von Geld- oder Kreditkarten mit einer zentralen EDV bearbeiten sowie Nutzungsanalysen und aus Eingaben der Nutzer auch Kundenverhaltensanalysen von einem oder mehreren der Terminals zentral erstellen. Dazu können auch Daten dienen, die der Terminalnutzer beispielsweise zur Teilnahme an einem Gewinnspiel nach Aufforderungen, die beispielsweise auf einem Bildschirm des Terminals angezeigt werden, optional an dem Terminal beispielsweise über eine Tastatur eingibt.

Vorteilhaft ist das Terminal derart ausgelegt, dass die aufgenommenen Daten außer Filmsequenzen weitere Bild- und/oder Tondaten und/oder Texteingaben sein können. Dazu können in das Terminal alle dem Fachmann bekannten Computerperipheriegeräte oder Datenaufnahmegeräte, wie Mikrophon, Tastatur, Touchscreen-Bildschirm, Maus, etc. integriert werden.

Bevorzugt wird bei dem Verfahren der vorliegenden Erfindung zur Datenübertragung zumindest teilweise das Internet und/oder ein kabelloses Netz, insbesondere ein UMTS-Funknetz als Kommunikationsnetzwerk verwendet. Mit dem Internet und/oder einem UMTS-Funknetz werden so leistungsfähige und weitverbreitete Netze, die auch untereinander kombiniert werden können, genutzt. Insbesondere erlaubt die Verwendung von kabellosen Netzen eine einfache Installation des Terminals ohne Anschluss und Verlegung von Kommunikationskabeln.

In einer besonders günstigen Ausführung des Verfahrens der vorliegenden Erfindung nimmt das Terminal automatisch Signale aus der Umgebung auf und nimmt daraufhin selbstständig Einstellungen an Teilen des Terminals, insbesondere Belichtungseinstellungen der Kamera vor. Dazu kann jede geeignete, dem Fachmann bekannte automatisierte Regelungstechnik verwendet werden. So kann beispielsweise die Abstimmung der Kamera auf Lichtverhältnisse und gegebenenfalls die Abstimmung eines Mikrophons auf Umgebungslautstärke oder die Lautstärke beim Sprechen in das Mikrophon automatisch angepasst werden.

Vorteilhaft zeigt das Terminal dem Nutzer Informationen, insbesondere über die verbleibende Nutzungszeit und über Nutzungskosten des Terminals an. Dies kann wie bei öffentlichen Telefonzellen, durch Anzeige des eingezogenen Geldbetrages geschehen oder durch Anzeige der verbleibenden Aufnahmedauer nach Einwurf einer Münze oder Festlegen einer vorgegebenen Nutzungszeit oder eines vorgegebenen Abbuchungsbetrages durch den Nutzer.

Vorteilhaft werden Datenverarbeitungsvorgänge zumindest teilweise von zumindest einem externen Datenverarbeitungsgerät durchgeführt, das über zumindest ein Kommunikationsnetzwerk mit dem Terminal verbunden ist. Dadurch können bestimmte, mit dem Terminalbetrieb zusammenhängende Vorgänge auf einem mit mehreren Terminals verbundenes Datenverarbeitungsgerät zentralisiert oder auf mehrere andere mit diesem Datenverarbeitungsgerät und/oder mit mindestens einem Terminal verbundene Datenverarbeitungsgeräte dezentralisiert werden. Dies können beispielsweise EDV Vorgänge sein, wie die Übertragung von Wartungsanweisungen für mindestens ein Terminal, Buchungsvorgänge von Geld- oder Kreditkarten oder Datenaufbereitungen für Nutzungsanalysen und Kundenverhaltensanalysen. Dazu kann insbesondere jede geeignete, dem Fachmann bekannte Controlling-Software eingesetzt werden.

In einer bevorzugten Ausführung des Verfahrens der vorliegenden Erfindung muss vor dem Versenden der Daten vom Terminalnutzer zumindest ein Code eingegeben werden und vor der Datenwiedergabe auf dem Datenverarbeitungsgerät des Empfängers ein diesem Code zugeordneter Code eingegeben werden. Dabei handelt es sich entweder in beiden Fällen um denselben Code oder bei dem vom Empfänger einzugebenden Code um einen Antwortcode. Die versendeten Daten sind dann auf einem Empfangsgerät nur begrenzt bzw. gesichert zugänglich. In dieser Ausführungsform umfasst die Software für das Terminal eine Abfragefunktion, die den Nutzer beispielsweise über eine auf einem Bildschirm anzeigte Aufforderung anweist, einen Code, beispielsweise über eine Tastatur vor dem Versenden der Daten einzugeben, während das versendete auf einem Datenverarbeitungsgerät ausführbare Programm diesen Code oder einen bestimmten, diesem Code zugeordneten Antwortcode abfragt, bevor es die vom Terminal aufgenommenen Daten, gegebenenfalls in Kombination mit weiteren Daten wiedergibt. Für diese Ausführungsform können alle geeigneten, dem Fachmann bekannten Codesicherungssoftwaresysteme eingesetzt werden, wie sie zum Beispiel im Online-Banking üblich sind.
Noch bevorzugter ist bei dem Verfahren gemäß der Erfindung vorgesehen, dass die versandten Daten auch auf dem Terminal nach Eingabe eines Codes wiedergegeben werden können. Das Terminal kann so auch als öffentliches Empfangsgerät für von einem solchen Terminal versandte Daten dienen und dazu die oben beschriebenen Codesicherungssysteme umfassen. Die Datenwiedergabe durch das Terminal kann wie oben für das Versenden von Daten beschrieben mit der Geldbetrageinzugsfunktion des Terminals verknüpft sein.

Vorteilhaft werden dazu die mit dem Code gesicherten Daten zentral auf einem Datenverarbeitungsgerät, das über zumindest ein Kommunikationsnetzwerk mit dem Terminal verbunden ist und welches als Server eingesetzt wird, zentral gespeichert und sind davon über zumindest ein Kommunikationsnetzwerk abrufbar. Eine versandte Nachricht kann so abgelegt und beispielsweise an dem Terminal oder anderen über eines der Kommunikationsnetzwerke mit dem Terminal verbundenen Datenverarbeitungsgeräten wieder abgerufen werden.

In einer günstigen Ausführung des Verfahrens der vorliegenden Erfindung werden die Daten als ein auf einem Datenverarbeitungsgerät ausführbares Programm in Form einer .exe-Datei versendet, welche die vom Terminal aufgenommenen, digitalisierten Daten und eine Software, insbesondere einen Player zur Wiedergabe vom Terminal aufgenommener Bilddaten als Video auf einem Computer umfasst. Dazu können alle geeigneten, dem Fachmann bekannte Programmierungen eingesetzt werden. Vom Terminal versendete Videosequenzen können so beispielsweise leicht auf einem Standard-Personalcomputer als kompakte Datei empfangen und wiedergegeben werden.

Besonders vorteilhaft umfasst das auf einem Datenverarbeitungsgerät ausführbare Programm zudem die Option zum Aufbau mindestens einer Internetverbindung, insbesondere zum Abruf einer Internethomepage. So werden beispielsweise auf der angezeigten Benutzeroberfläche des Datenverarbeitungsgerätes des Empfängers außer den Bildelementen eines Videoplayers Links zu Internethomepages angezeigt, die per Mausklick anwählbar sind, wobei das Programm in Verbindung mit einem vorhanden Internetbrowser den Verbindungsaufbau über einen Netzwerkanschluss einleitet. Dazu kann jede geeignete, dem Fachmann bekannte Programmierung verwendet werden und insbesondere jene, die auf internetorientierten Standardbetriebssystemen für Computer und Standardsoftwarekonfigurationen ausgerichtet sind. Auf diese Weise kann der Empfänger zum Beispiel beim oder nach dem Öffnen der elektronischen Datennachricht von dem Terminal leicht Informationen wie Werbung über den Standort des Terminals oder von den Terminalbetreibern empfangen.

Vorzugsweise ist bei dem Verfahren der vorliegenden Erfindung die aufgenommene Filmsequenz 20 Sekunden lang und die versendeten Daten, welche die Bilddaten dieser Filmsequenz in komprimierter Form und ein Programm zur Wiedergabe dieser komprimierten Daten auf einem Datenverarbeitungsgerät umfassen, werden als eine Programmdatei mit einer kompakten Größe von maximal 500 - 600 KB verschickt.

Vorzugsweise umfasst ein Terminal für das Verfahren der vorliegenden Erfindung zumindest eine Kamera zur Bildaufnahme, eine Vorrichtung zum Einziehen von Geldbeträgen und ein Mittel, insbesondere eine Tastatur, zur Eingabe von Versandadressen, insbesondere e-mail-Adressen und/oder Textnachrichten.

Noch bevorzugter umfasst ein Terminal für das Verfahren Vorrichtungen zum Abrufen von Daten in Abhängigkeit einer Codeeingabe, insbesondere Bild- und Tondaten aus Kommunikationsnetzwerken.

Darüber hinaus umfasst das Terminal besonders zweckmäßig eine autonome Energieversorgung, insbesondere photovoltaische Solarzellen in Verbindung mit einem Stromakkumulator für Speicherung und Abgabe der gewonnenen Energie. Ebenso kann jede andere, dem Fachmann bekannte autonome Energieversorgung eingesetzt werden, wie beispielsweise Wind- oder Wasserkraftanlagen. Das Terminal ist so insbesondere bei Verwendung eines kabellosen Kommunikationsnetzwerkes besonders leicht und kostengünstig auf- und abbaubar.

Die Erfindung wird im Folgenden anhand eines Beispiels unter Bezugnahme auf die beiliegende Zeichnung veranschaulicht:

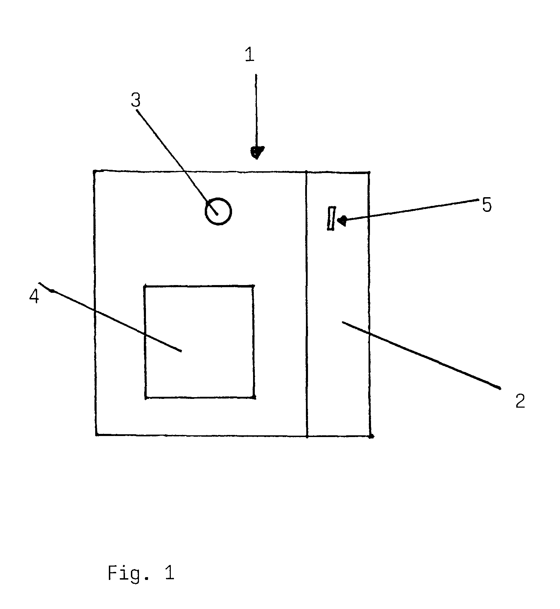

Figur 1 zeigt eine Frontansicht eines bei dem Verfahren der vorliegenden Erfindung eingesetzten Terminals.

Figur 1 zeigt ein Terminal 1 für das Verfahren der vorliegenden Erfindung. Dieses ist mit einer rückwärtigen Halterung an einer Wand angebracht (nicht dargestellt). Auf der vom Betrachter aus rechten Seite des Terminals 1 ist ein Kassierautomat 2 mit einem Münzeinwurf 5 in das Terminal integriert. Im oberen Teil ist mittig in das Terminal 1 eine auf den Betrachter ausgerichtete Kamera 3 und darunter ein Touchscreen-Bildschirm 4 integriert. Diese Hardwarekomponenten, Kassierautomat 2, Kamera 3 und Touchscreen-Bildschirm 4 sind an einen im Terminal angeordneten Computer mit Anschluss an eine externe Stromversorgung und an einen Internetanschluss angeschlossen (nicht dargestellt).

Im folgenden werden beispielhaft die von dem in das Terminal 1 integrierten Computer gemäß dem Verfahren der vorliegenden Erfindung mit einer Software ausgeführten Vorgänge und die Interaktionen des Terminalnutzers mit dem Terminal beschrieben:

In einem Leerlaufmodus werden die von der Kamera aufgenommenen Bilddaten simultan von dem Touchscreen-Bildschirm 4 wiedergegeben. Auf Schaltflächen des Touchscreen-Bildschirms 4 erscheinen jeweils die Worte 'Englisch', 'Französisch', 'Deutsch', 'Spanisch', 'Italienisch'. Nach Berühren einer Schaltfläche wird der entsprechende Sprache eingestellt, in der dem Terminalnutzer nachfolgend Textsequenzen auf dem Touchscreen-Bildschirm 4 angezeigt werden. Diese werden im folgenden nur für die Auswahl 'Deutsch' beschrieben.

Gleichzeitig wechselt das angezeigte Bild auf dem Touchscreen-Bildschirm 4 und es werden eine mit 'Startaufforderung' beschriftete Schaltfläche sowie Bedienungshinweise für das Terminal 1 auf dem Touchscreen-Bildschirm 4 angezeigt.

Bei Berührung dieser Schaltfläche wird die Zahlungsaufforderung '1 Videomail gleich 2 DM' angezeigt.

Wenn anschließend ein Münzeinwurf 5 erfolgt, wechselt das Bild des Touchscreen-Bildschirms 4 und es wird auf dem Touchscreen-Bildschirm 4 eine mit ,Aufnahmetaste' beschriftete Schaltfläche angezeigt.

Bei Berührung dieser Schaltfläche werden die bis zur Aufnahme verbleibenden Sekunden als jeweils als Zahl und anschließend, angefangen von 20 Sekunden, die für die Filmaufnahme verbleibende Zeit angezeigt.

Daran anschließend wird diese Filmaufnahme einmalig vom Touchscreen-Bildschirm 4 wiedergegeben, wonach der Touchscreen-Bildschirm 4 den Text 'Sind Sie mit Ihrem Video zufrieden' anzeigt sowie mit 'JA' und 'NEIN' beschriftete Schaltflächen.

Bei Berühren der mit 'NEIN' beschrifteten Schaltfläche wiederholt sich der Vorgang ab Anzeige der mit 'Startaufforderung' beschrifteten Schaltfläche.

Bei Berühren der mit 'JA' beschrifteten Schaltfläche wechselt die Bildschirmanzeige und es wird eine Abbildung einer Standardschreibmaschinentastatur angezeigt, wobei die angezeigten Tasten als Schaltflächen ausgebildet sind. Darüber wird auf dem Touchscreen-Bildschirm 4 der Text 'Eingabe der Empfänger E-Mailadresse' angezeigt und eine mit 'Absenden' bezeichnete Schaltfläche'.

Bei Berühren dieser Schaltfläche nach Eingabe einer e-mailAdresse auf der auf dem Touchscreen-Bildschirm 4 wiedergegebenen Tastatur wird die von der Kamera aufgenommene und von dem Computer digitalisierte Filmsequenz komprimiert, mit einer Bildwiedergabesoftware versehen und als auf einem PC ausführbare .exe-Datei von maximal 500 - 600 KB verschickt.

In einer weiteren Ausführungsform der vorliegenden Erfindung umfaßt das Terminal Soft- und Hardwarekomponenten, insbesondere mindestens einen Bildschirm, mindestens ein Eingabegerät und mindestens einen Internetbrowser und mindestens einen Netzwerkanschluss über mindesten ein Modem, zum Abruf von Daten, insbesondere einer begrenzten Auswahl von Daten aus einem Kommunikationsnetzwerk und ist so beispielsweise zusätzlich als Terminal verwendbar, das Nutzern einen leichten Zugang zum Internet ermöglicht. Dazu können beispielsweise Standardkomponenten aus Personal Computern mit Modems, Standardbetriebssystemen, Eingabegeräten wie Tastatur und Maus und Internetbrowsern in das Terminal integriert werden und beispielsweise mit der Vorrichtung zum Einziehen von Geldbeträgen verbunden werden. Die Software, beispielsweise ein Standardinternetbrowser, der nur den Zugang zu bestimmten www.-Adressen freigibt, kann vorteilhaft eine begrenzte Auswahl von Daten aus einem Kommunikationsnetzwerk wie dem Internet ermöglichen, um so beispielsweise Informationen und/oder Werbung bestimmter Anbieter den Terminalnutzern gezielt zugänglich zu machen. Dadurch lassen beispielsweise sich Terminalkosten auf diese Anbieter verlagern.

## Patentansprüche

1. Verfahren zur Aufnahme, Fernübertragung und Wiedergabe von Daten, wobei zumindest teilweise nichtdigitale Daten aufgenommen und digitalisiert werden und die Daten elektronisch bearbeitet, insbesondere komprimiert und als auf einem Datenverarbeitungsgerät ausführbares Programm über mindestens ein Kommunikationsnetzwerk versendet werden, **dadurch gekennzeichnet, dass** zur Aufnahme der Daten ein automatisiertes Terminal (1) mit zumindest einer Kamera (3) und zumindest einer Vorrichtung zum Einziehen von Geldbeträgen (2) dient.

2. Verfahren nach Anspruch 1, **dadurch gekennzeichnet, dass** die vom Terminal (1) aufgenommenen Daten vor dem Versenden als ausführbares Programm mit weiteren Daten kombiniert werden, die von dem Terminal (1) und/oder extern von mindestens einem Datenverarbeitungsgerät über mindestens eines der mit dem Terminal (1) verbundenen Kommunikationsnetzwerke zugeführt werden.

3. Verfahren nach einem der vorhergehenden Ansprüche, **dadurch gekennzeichnet, dass** die von dem Terminal (1) versandten Daten vor dem Versenden zumindest teilweise von dem Terminal (1) wiedergegeben werden.

4. Verfahren nach einem der vorhergehenden Ansprüche, **dadurch gekennzeichnet, dass** von den versendbaren Daten zumindest einige nach vom Anwender eingegebenen Angaben ausgewählte Daten versendet und/oder teilweise gelöscht werden.

5. Verfahren nach einem der vorhergehenden Ansprüche, **dadurch gekennzeichnet, dass** vom Terminal (1) erfasste Daten, insbesondere Eingaben des Terminalnutzers, zumindest teilweise über zumindest eines der Kommunikationsnetzwerke auf zumindest ein externes Datenverarbeitungsgerät übertragen werden.

6. Verfahren nach einem der vorhergehenden Ansprüche, **dadurch gekennzeichnet, dass** die aufgenommenen Daten Bild- und/oder Tondaten und/oder Texteingaben sind.

7. Verfahren nach einem der vorhergehenden Ansprüche, **dadurch gekennzeichnet, dass** zumindest teilweise das Internet und/oder ein kabelloses Netz, insbesondere ein UMTS-Funknetz als Kommunikationsnetzwerk verwendet wird.

8. Verfahren nach einem der vorhergehenden Ansprüche, **dadurch gekennzeichnet, dass** das Terminal (1) automatisch Signale aus der Umgebung aufnimmt und daraufhin selbstständig Einstellungen an Teilen des Terminals (1), insbesondere Belichtungseinstellungen der Kamera (3) vornimmt.

9. Verfahren nach einem der vorhergehenden Ansprüche, **dadurch gekennzeichnet, dass** das Terminal (1) dem Nutzer Informationen, insbesondere über die verbleibende Nutzungszeit und über Nutzungskosten, des Terminals (1) anzeigt.

10. Verfahren nach einem der vorhergehenden Ansprüche, **dadurch gekennzeichnet, dass** Datenverarbeitungsvorgänge zumindest teilweise von zumindest einem über zumindest ein Kommunikationsnetzwerk mit dem Terminal (1) verbundenen, externen Datenverarbeitungsgerät durchgeführt werden.

11. Verfahren nach einem der vorhergehenden Ansprüche, **dadurch gekennzeichnet, dass** vor dem Versenden der Daten vom Terminalnutzer zumindest ein Code eingegeben wird und vor der Datenwiedergabe auf dem Datenverarbeitungsgerät des Empfängers ein bestimmter, diesem Code zugeordneter Code einzugeben ist.

12. Verfahren nach Anspruch 11, **dadurch gekennzeichnet, dass** die versandten Daten auch auf dem Terminal (1) nach Eingabe eines bestimmten Codes wiedergegeben werden können.

13. Verfahren nach Anspruch 11 oder 12, **dadurch gekennzeichnet, dass** die mit dem Code gesicherten Daten zentral auf einem, über zumindest ein Kommunikationsnetzwerk mit dem Terminal (1) verbundenen Datenverarbeitungsgerät zentral gespeichert werden und über zumindest ein mit diesem Datenverarbeitungsgerät verbundenes Kommunikationsnetzwerk abrufbar sind.

14. Verfahren nach einem der vorhergehenden Ansprüche, **dadurch gekennzeichnet, dass** die Daten als ein auf einem Datenverarbeitungsgerät ausführbares Programm in Form einer .exe-Datei versendet werden, welche die vom Terminal aufgenommenen, digitalisierten Daten und eine Software, insbesondere einen Player zur Wiedergabe vom Terminal (1) aufgenommener Bilddaten als Video auf einem Computer umfasst.

15. Verfahren nach einem der vorhergehenden Ansprüche, **dadurch gekennzeichnet, dass** das auf einem Datenverarbeitungsgerät ausführbare Programm die Option zum Aufbau mindestens einer Internetverbindung, insbesondere zum Abruf einer Internethomepage umfasst.

16. Verfahren nach einem der vorhergehenden Ansprüche, **dadurch gekennzeichnet, dass** die aufgenommene Filmsequenz 20 Sekunden lang ist und die versendeten Daten, welche die Bilddaten dieser Filmsequenz in komprimierter Form und ein Programm zur Wiedergabe dieser komprimierten Daten auf einem Datenverarbeitungsgerät umfassen, als eine Programmdatei mit einer Größe von maximal 500 - 600 KB verschickt werden.

17. Terminal (1) für ein Verfahren nach einem der vorhergehenden Ansprüche, **dadurch gekennzeichnet, dass** das Terminal (1) zumindest eine Kamera (3) zur Bildaufnahme, eine Vorrichtung zum Einziehen von Geldbeträgen (2) und ein Mittel, insbesondere eine Tastatur zur Eingabe von Versandadressen, insbesondere e-mail-Adressen und/oder Textnachrichten umfasst.

18. Terminal (1) nach Anspruch 17, **dadurch gekennzeichnet, dass** Vorrichtungen zum Abrufen von Daten in Abhängigkeit von einer Codeeingabe, insbesondere Bild- und Tondaten aus Kommunikationsnetzwerken.

19. Terminal (1) nach Anspruch 17 oder 18, **dadurch gekennzeichnet, dass** das Terminal (1) eine autonome Energieversorgung, insbesondere Solarzellen, umfasst.

20. Terminal für ein Verfahren nach einem der Ansprüche 1 bis 16 und/oder nach einem der Ansprüche 17 bis 19, **dadurch gekennzeichnet, dass** das Terminal Soft- und Hardwarekomponenten, insbesondere mindestens einen Bildschirm, mindestens ein Eingabegerät und mindestens einen Internetbrowser, einschließlich eines gegebenenfalls customprogrammierten Browsers und mindestens einen Netzwerkanschluss über mindesten ein Modem, zum Abruf von Daten, insbesondere einer begrenzten Auswahl von Daten aus einem Kommunikationsnetzwerk, auch als Festplatte eines PC, umfasst.
